# FASCICULE DE BREVET EUROPEEN

(11) **EP 0 749 864 B1**
(45) Date de publication et mention de la délivrance du brevet: **22.03.2000**
(21) Numéro de dépôt: 96420209.7
(22) Date de dépôt: 21.06.1996
(51) Int. Cl.: B60N 2/00

(54) **Fixation de sécurité pour siège amovible de véhicule**
Sicherungsbefestigung für herausnehmbare Fahrzeugsitze
Safe attachment for removable vehicle seats

(30) Priorité: 22.06.1995 FR 9507804
(43) Date de publication de la demande: 27.12.1996
(73) Titulaire: Grupo Antolin-Ingenieria S.A., 09080 Burgos (ES)
(72) Inventeur: Chabanne, Jean-Pierre, 89710 Champvallon (FR)
(74) Mandataire: Perrier, Jean-Pierre

(56) Documents cités:
- EP-A- 0 397 333
- EP-A- 0 537 078
- EP-A- 0 545 743
- EP-A- 0 602 696
- EP-A- 0 609 130
- EP-A- 0 618 102

## Description

L'invention est relative à une fixation de sécurité pour siège amovible de véhicule.

Il est déjà connu d'équiper certains véhicules automobiles de sièges amovibles pouvant être enlevés, sans recours à aucun outil, soit pour dégager le plancher et accroître la possibilité de transport de marchandises, soit pour être retournés vers l'arrière.

La demande de brevet européen EP-A-0 397 333 décrit un siège dans lequel chacun des quatre pieds du piétement est muni de moyens de fixation sur une tige transversale correspondante fixée dans un puits du plancher, ces moyens comprenant une partie en forme de crochet pour chacun des pieds avant et deux parties en forme de crochet pour chacun des pieds arrière coopérant avec ladite tige transversale, un verrou mobile de calage de chacun desdits pieds sur la tige correspondante, des moyens de rappel du verrou et des moyens de déverrouillage manuels de ce verrou.

Un tel mode de fixation donne entière satisfaction pour un siège traditionnel mais peut se révéler insuffisant lorsqu'il équipe un siège dont le châssis sert à l'accrochage des trois points d'ancrage d'une ceinture de sécurité. En effet, dans ce cas, la fixation du siège au plancher doit être en mesure de résister aux efforts instantanés élevés qu'elle reçoit à travers le châssis, et qui résultent de l'énergie cinétique communiquée au passager, transmise par les sangles de la ceinture aux trois points d'ancrage de celle-ci. Ces efforts sont d'autant plus défavorables, qu'en cas de choc frontal, ils tendent à faire pivoter le siège autour de sa fixation avant en sollicitant à l'arrachement la fixation arrière du siège.

La présente invention a pour but de remédier à ces inconvénients, en fournissant une fixation de sécurité assurant un double verrouillage et autobloquante en cas d'accident.

A cet effet, les deux parties en forme de crochet des moyens de fixation de chacun des pieds arrière coopèrent chacune avec l'une des deux tiges parallèles fixes, disposées dans un même puits du plancher, ces deux parties étant ménagées, respectivement, sur un verrou avant et sur un verrou arrière, tandis que le verrou avant est articulé à l'avant et à la base d'un support commun et comporte, à l'opposé de sa partie en forme de crochet et dans sa partie supérieure arrière, un talon triangulaire délimité par deux faces de butée, respectivement, supérieure de calage en position verrouillée, et arrière de calage en position d'ouverture, et que le verrou arrière est articulé près du sommet, et sensiblement au milieu du support commun, et comporte, entre cette articulation et sa partie en forme de crochet et sur sa face avant, une excroissance triangulaire délimitée par deux faces de butée, respectivement avant de calage en position d'ouverture, et inférieure de calage en position de verrouillage, le talon triangulaire du verrou avant et l'excroissance triangulaire du verrou arrière coopérant, afin d'assurer l'auto blocage de la fixation.

Grâce à cette structure, les moyens de fixation de chacun des pieds du piètement comprennent deux verrous dont les deux butées complémentaires coopèrent, pour maintenir ces verrous, soit en position d'ouverture, c'est-à-dire dans une position dans laquelle leurs crochets peuvent s'enfourcher sur ou s'extraire des tiges d'ancrage ménagées dans le plancher, soit en position de verrouillage dans laquelle les deux crochets sont en prise avec les tiges, sans pouvoir s'en détacher, en raison des interactions de l'un sur l'autre.

Par la disposition et la conjugaison des faces de butée, les deux verrous de chaque pied peuvent occuper une position d'ouverture stable favorisant l'enclenchement du dispositif de fixation dans les tiges du plancher, et une position de verrouillage stable et autoblocante. En cas d'efforts sur l'avant, tendant à faire basculer le siège par rapport à sa fixation avant, le verrou avant du dispositif de fixation arrière tend, lorsqu'il est en position de verrouillage, à pivoter dans le sens inverse des aiguilles d'une montre, en accroissant l'effort de calage en rotation qu'il exerce sur le verrou arrière, ce qui a pour effet d'empêcher le déverrouillage accidentel de ce verrou.

D'autres caractéristiques et avantages ressortiront de la description qui suit en référence au dessin schématique annexé, représentant à titre d'exemple, une forme d'exécution de cette fixation de sécurité.
Figures 1 et 2 sont des vues de côté, en coupe transversale de la partie inférieure d'un siège, lorsqu'il est respectivement en position de mise en place des pieds avant et après mise en place de ceux-ci et basculement vers l'arrière pour engagement des pieds arrière,
Figures 3 et 4 montrent, à échelle agrandie, les moyens de fixation arrière, respectivement, lors de leur engagement sur les tiges du plancher et en fin d'engagement,
Figure 5 est une vue en coupe du dispositif de fixation suivant la figure 4,
Figure 6 est une vue en perspective éclatée, montrant les éléments essentiels du dispositif de fixation d'un pied arrière.

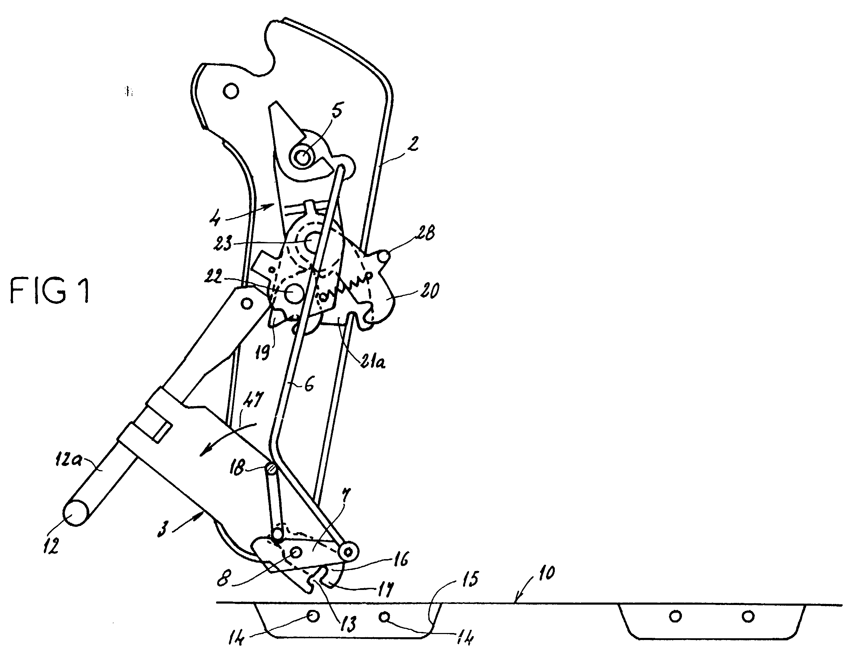

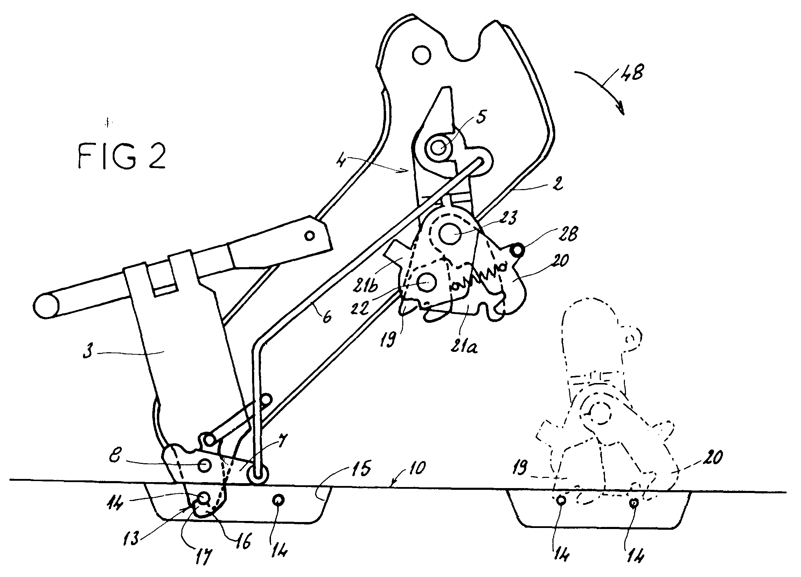

Aux figures 1 et 2, la référence numérique 2 désigne, de manière générale, le châssis du siège et plus spécialement l'armature d'assise de celui-ci. Cette armature porte deux pieds avant 3 et deux pieds arrière 4. Les pieds avant sont fixés rigidement à l'armature 2, tandis que les pieds arrière sont constitués par des leviers 4 montés libres en rotation autour d'un arbre 5, monté pivotant dans l'armature d'assise 2. L'un des leviers 4 est relié, par une tringlerie 6, à un levier 7, articulé en 8 sur le pied avant 3 correspondant. De façon connue, cette tringlerie est destinée à effacer les pieds 4 à l'intérieur de l'armature d'assise, lorsque le siège est pivoté sur l'avant et désolidarisé du plancher 10 du véhicule, comme montré dans la position représentée à la figure 1, mais aussi à amener les pieds en position d'utilisation, lorsque l'armature d'assise est amenée en position d'utilisation par pivotement autour de ses pieds avant, comme montré à la figure 2.

Les pieds 3 supportent, par leurs parties supérieures, les côtés 12a d'un cadre en "U" 12 constituant support d'assise.

Chaque pied avant est muni d'une fourche 13 qui est destinée à s'enfourcher sur l'une des deux tiges parallèles et transversales 14 disposées dans un puits 15 du plancher. On notera ici qu'il est déjà connu de doter la zone de fixation de chaque pied de deux tiges 14, afin de permettre de modifier la position longitudinale d'un siège par sélection de l'une ou l'autre des deux tiges d'un puits.

Les moyens de fixation des pieds avant comprennent, en complément des fourches 13, et pour chaque pied, un verrou 16 doté d'une partie en forme de crochet 17. Ce verrou est articulé autour de l'axe 8 et est relié à des moyens de rappel, tendant à le ramener en position de verrouillage. Il est solidaire d'un moyen de commande manuel, telle qu'une barre de commande 18 le reliant au verrou de l'autre pied avant.

Selon l'invention, le dispositif de fixation de sécurité de chacun des pieds arrière est composé d'un verrou avant 19 et d'un verrou arrière 20 montés libres en rotation dans un support commun désigné, de façon générale, par 21.

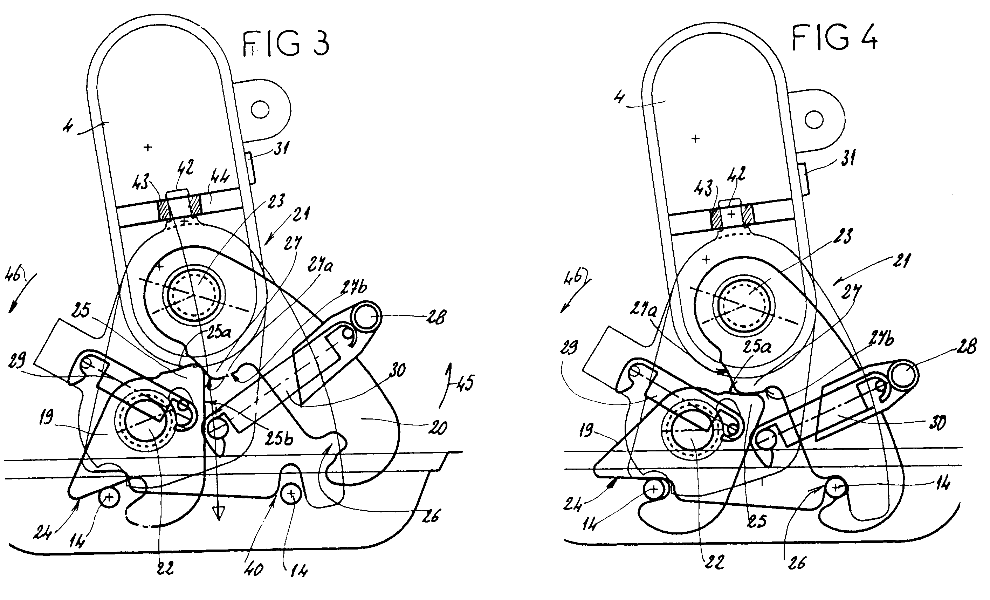

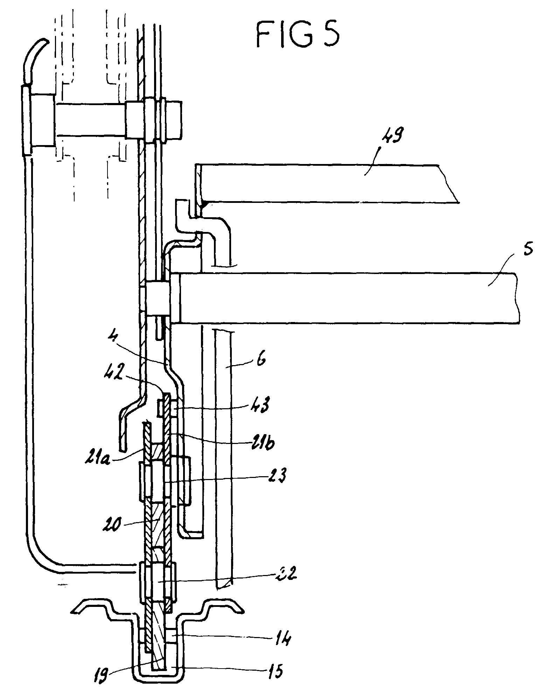

Comme montré aux figures 3 et 4, le verrou avant 19 est articulé autour d'un axe 22 qui est disposé à l'avant et à la base du support commun 21, tandis que le verrou 20 est articulé sur un axe 23 qui est disposé au-dessus de l'axe 22 près du sommet du support commun et sensiblement au milieu de ce dernier. Dans sa partie inférieure avant, le verrou avant 19 est doté d'une fourche ou crochet 24 et, à l'opposé de celle-ci par rapport à son axe d'articulation 22, il est muni d'un talon triangulaire 25. Ce talon est délimité par deux faces de butée, à savoir une face supérieure 25a, de calage en position de verrouillage, et une face arrière 25b, de calage en position d'ouverture. Le verrou arrière 20, qui est articulé par l'une de ses extrémités sur l'axe 23, est muni à proximité de son autre extrémité d'une fourche ou crochet 26. Sur sa face avant, entre son articulation 23 et la fourche 26, le levier arrière 20 comporte une excroissance triangulaire 27 qui est délimitée par deux faces d'appui, à savoir une face avant 27a, de calage en position d'ouverture, et une face inférieure 27b de calage en position de verrouillage.

Les verrous arrière 20 des deux pieds arrière sont reliés l'un à l'autre par une traverse 28 constituant également organe de déverrouillage manuel.

Chacun des verrous 19 et 20 est associé à un moyen de rappel, de type ressort de traction 29, 30, comme représenté au dessin, ou de type ressort spirale. Le moyen de rappel agissant sur le verrou 19 tend à ramener celui-ci en position d'ouverture, tandis que celui 30 agissant sur le verrou 20 tend à ramener celui-ci en position de verrouillage et à plaquer son excroissance 27 contre le talon 25 du verrou 19.

L'extrémité arrière du ressort 29 est accrochée sur le verrou 19, tandis que son extrémité avant est accrochée sur l'un des deux flasques 21a, 21b composant le support commun 21. Quant au ressort 30, il est accroché, par son extrémité avant, sur une entretoise 32 de liaison des deux flasques précitées, et, par son extrémité arrière, sur le verrou 20.

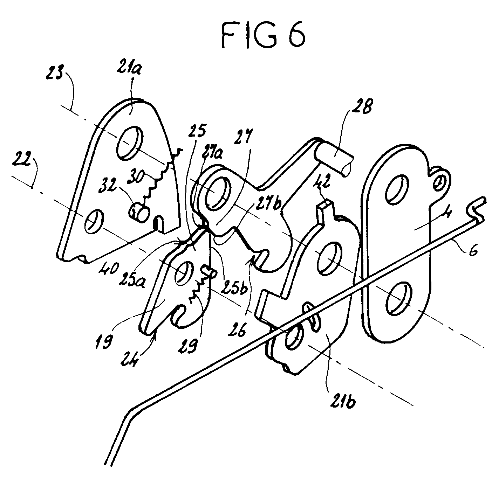

A la figure 6, montrant les composants d'un moyen de fixation d'un pied, il apparaît que le flasque 21a du support commun 21 est doté d'une fourche de positionnement 40 débouchant de son bord inférieur, tandis que le flasque 21b est doté d'un tenon 42 saillant de sa partie supérieure. Comme montré plus en détails aux figures 3 et 4, ce tenon est destiné à s'engager dans une bague 43, porté par une nervure 44 du pied 4 et dont l'utilité sera précisée plus loin. La figure 6 montre également que chacun des deux flasques 21a, 21b est monté à articulation sur l'axe 23 d'articulation du verrou arrière 20 sur le support commun 21.

Grâce à ce montage, le support commun 21 a une certaine mobilité angulaire par rapport au pied 4, mobilité qui est limitée par la compression de la bague 43, mais qui est suffisante pour compenser les variations dimensionnelles, dues aux tolérances de fabrication des composants du dispositif de fixation, et obtenir un fonctionnement régulier de ce dispositif.

Pour amener le dispositif de fixation en position d'ouverture, il faut faire pivoter le verrou arrière 20, dans le sens de la flèche 45 de figure 3. Ce pivotement provoque le dégagement de son excroissance 27 de la trajectoire du talon 25 du verrou avant 19, qui peut ainsi, sous l'action de son ressort de rappel, pivoter dans le sens de la flèche 46, jusqu'à ce que sa face arrière vienne en butée contre l'entretoise 32. Après relâchement du verrou 20 et rappel de celui-ci par son ressort 30, le dispositif est calé dans sa position d'ouverture, représenté aux figures 1 et 2, position dans laquelle le talon 25, et éventuellement la face arrière 25b du verrou 19, sont en contact de butée avec la face avant 27a du verrou 20.

Lorsque le dispositif est en position de verrouillage et comme montré à la figure 4, la face arrière 27b de l'excroissance 27 du verrou 20 est en contact avec la face supérieure (avant) 25a du talon 25 du verrou 19 et s'oppose ainsi à tout pivotement de ce verrou.

Le passage de l'une à l'autre de ces positions va maintenant être décrit en référence aux figures 1 à 4.

A la figure 1, le dispositif de fixation des pieds avant est représenté en position d'ouverture, correspondant à une action manuelle dans le sens de la flèche 47 sur le levier 18. Cela permet au crochet 17 du verrou 16 de dégager la fourche 13 du pied 3 correspondant et de permettre l'engagement de cette fourche sur la tige 14. A la fin de ce mouvement, le relâchement de l'action manuelle sur la traverse 18 permet au moyen de rappel du verrou 16, de ramener le crochet 17 autour de la tige 14, en assurant le verrouillage de cette liaison, comme montré à la figure 2.

Dans la phase suivante (figure 2), le pivotement du siège autour de la tige avant 14, dans le sens de la flèche 48, provoque, par le levier 7, articulé autour de l'axe 8, le développement de l'un des pieds 4, par rotation autour de l'axe 5. Ce développement, limité par une butée 31 du châssis, de l'un des pieds arrière se transmet à l'autre pied grâce à une entretoise 49 reliant ceux-ci. Le pivotement amène le support commun 21, articulé sur chaque pied, au-dessus des deux tiges 14 arrière, comme représenté en traits mixtes à la figure 2. En fin de pivotement, montré à la figure 3, et tandis que la fourche 40 de la platine 21a coopère avec la tige arrière 14 pour positionner l'ensemble du dispositif de calage, la tige avant 14 vient en contact avec le crochet 24 du verrou avant 19 et fait pivoter ce verrou dans le sens inverse de la flèche 46. Par son pivotement, le talon 25 soulève le verrou arrière 20, dans le sens de la flèche 45, jusqu'au moment où il échappe de la face avant de butée 27a pour venir en contact, par sa face supérieure (avant) 25a, avec la face arrière 27b de ce verrou arrière. Dans cette position de verrouillage, les deux crochets 24 et 26 sont engagés à fond sur les tiges 14 et assurent donc le double verrouillage de chaque pied sur les tiges 14 correspondantes. Par ailleurs, en cas d'accident frontal, tendant à faire pivoter le siège autour des pieds avant en soulevant verticalement les pieds arrière, un effort de soulèvement se transmet par le support commun 21 à l'axe 22 du verrou 19. Ce verrou 19, étant retenu par son crochet 24 sur la tige 14, est soumis à un couple de rotation dans le sens de la flèche 46, couple qui tend à plaquer davantage son talon 25 contre l'excroissance 27 du verrou arrière 20, en assurant ainsi un surverrouillage autobloquant ce verrou et l'empêchant de pivoter dans le sens du déverrouillage.

Il ressort de ce qui précède que le dispositif de fixation selon l'invention, assure non seulement un meilleur ancrage du plancher des pieds arrière du siège, mais augmente aussi la sécurité de cet ancrage en empêchant son déverrouillage en cas d'accident.

## Revendications

1. Fixation de sécurité pour siège amovible de véhicule du type dans lequel chacun des quatre pieds (3, 4) du piétement est muni de moyens de fixation sur une tige transversale correspondante (14) fixée dans un puits (15) du plancher, ces moyens comprenant une partie en forme de crochet pour chacun des pieds avant (3) et deux parties (24, 26) en forme de crochet pour chacun des pieds arrière (4) coopérant avec ladite tige transversale, un verrou mobile de calage de chacun desdits pieds sur la tige correspondante, des moyens de rappel du verrou et des moyens de déverrouillage manuels de ce verrou, **caractérisée en ce que** lesdites deux parties (24, 26) en forme de crochet coopèrent chacune avec l'une des deux tiges parallèles fixes (14), disposées dans un même puits du plancher, ces deux parties (24, 26) étant ménagées, respectivement, sur un verrou avant (19) et sur un verrou arrière (20), tandis que le verrou avant (19) est articulé à l'avant et à la base d'un support commun (21) et comporte, à l'opposé de sa partie en forme de crochet (24) et dans sa partie supérieure arrière, un talon triangulaire (25) délimité par deux faces de butée, respectivement, supérieure (25a) de calage en position verrouillée, et arrière (25b) de calage en position d'ouverture, et que le verrou arrière (20) est articulé près du sommet, et sensiblement au milieu du support commun (21), et comporte, entre cette articulation ct sa partie en forme de crochet (26) et sur sa lace avant, une excroissance triangulaire (27) délimitée par deux faces de butée, respectivement avant (27a) de calage en position d'ouverture et inférieure (27b) de calage en position de verrouillage, le talon triangulaire (25) du verrou avant (19) et l'excroissance triangulaire (27) du verrou arrière (20) coopérant, afin d'assurer l'auto blocage de la fixation.

2. Fixation selon la revendication 1, **caractérisée en ce que** le verrou avant (19) est associé à des moyens de rappel (29) tendant à le ramener en position de déverrouillage, tandis que le verrou arrière (20) est associé à des moyens de rappel (30) tendant à le ramener en position de verrouillage.

3. Fixation selon l'une quelconque des revendications 1 à 2, **caractérisée en ce que** le support commun (21) aux deux verrous (19, 20), est lié à chaque pied arrière (4) correspondant par une articulation (23, 42, 43) à mobilité angulaire limitée.

4. Fixation selon la revendication 3, **caractérisée en ce que** le support commun (21) est composé de deux flasques (21a, 21b), disposés de part et d'autre des verrous (19, 20), et l'un de ces flasques se prolonge par un tenon (42) pénétrant dans une bague (43) en matériau compressible portée par le pied arrière (4) correspondant.

5. Fixation selon l'une quelconque des revendications 1 à 4, **caractérisée en ce que** le support commun (21) comporte, débouchant de sa face inférieure, une découpe 40 de positionnement du pied arrière (4) correspondant sur une tige (14), lors de l'enclenchement de ce pied vers les tiges arrière.

6. Fixation selon l'une quelconque des revendications 1 à 5, **caractérisée en ce que** les verrous arrière (20) sont reliés l'un à l'autre par une traverse (28), formant organe de déverrouillage manuel.

## Patentansprüche

1. Sicherungsbefestigung für einen lösbaren Fahrzeugsitz des Typs, bei dem jeder von vier Füßen (3, 4) der Fußanordnung mit Mitteln zur Befestigung an einer entsprechenden Querstange (14) ausgestattet ist, welche in einer Ausnehmung (15) des Bodens befestigt ist, wobei diese Mittel für jeden der vorderen Füße (3) einen hakenförmigen Teil und für jeden der hinteren Füße (4) zwei hakenförmige Teile (24, 26) umfassen, die mit der Querstange zusammenwirken, einen beweglichen Riegel zum Feststellen jedes der Füße an der entsprechenden Stange aufweisen und ferner Riegelrückstellmittel und Mittel zur manuellen Entriegelung dieses Riegels aufweisen, **dadurch gekennzeichnet**, daß die zwei hakenförmigen Teile (24, 26) jeweils mit einer der zwei festen parallelen Stangen (14) zusammenwirken, die in ein und derselben Ausnehmung des Bodens angeordnet sind, wobei diese zwei Teile (24, 26) an einem vorderen Riegel (19) bzw. an einem hinteren Riegel (20) vorgesehen sind, wohingegen der vordere Riegel (19) vorne und an der Basis eines gemeinsamen Trägers (21) angelenkt ist, und seinem hakenförmigen Teil (24) entgegengesetzt und an seinem oberen hinteren Teil einen dreieckigen Absatz (25) umfaßt, der durch zwei Anschlagflächen begrenzt ist, eine obere (25a) zum Feststellen in der Verriegelungsstellung bzw. eine hintere (25b) zum Feststellen in der Öffnungsstellung, und daß der hintere Riegel (20) in der Nähe der Spitze und im wesentlichen in der Mitte des gemeinsamen Trägers (21) angelenkt ist, und zwischen dieser Anlenkung und seinem hakenförmigen Teil (26) und an seiner vorderen Fläche eine dreieckige Ausstülpung (27) umfaßt, die durch zwei Anschlagflächen begrenzt ist, eine vordere (27a) zum Feststellen in der Öffnungsstellung bzw. eine untere (27b) zum Feststellen in der Verriegelungsstellung, wobei der dreieckige Absatz (25) des vorderen Riegels (19) und die dreieckige Ausstülpung (27) des hinteren Riegels (20) zusammenwirken, um die Selbstblockierung der Befestigung zu gewährleisten.

2. Befestigung nach Anspruch 1, **dadurch gekennzeichnet**, daß der vordere Riegel (19) Rückstellmitteln (29) zugeordnet ist, die versuchen, ihn in die Entriegelungsstellung zurückzubringen, wohingegen der hintere Riegel (20) Rückstellmitteln (30) zugeordnet ist, die versuchen, ihn in die Verriegelungsstellung zurückzubringen.

3. Befestigung nach einem der Ansprüche 1 bis 2, **dadurch gekennzeichnet**, daß der den zwei Riegeln (19, 20) gemeinsame Träger (21) mit jedem entsprechenden hinteren Fuß (4) durch eine Anlenkung (23, 42, 43) mit begrenzter angularer Beweglichkeit verbunden ist.

4. Befestigung nach Anspruch 3, **dadurch gekennzeichnet**, daß der gemeinsame Träger (21) durch zwei Flansche (21a, 21b) gebildet ist, die auf beiden Seiten der Riegel (19, 20) angeordnet sind, und daß einer dieser Flansche durch einen Zapfen (42) verlängert ist, der in einen durch den entsprechenden hinteren Fuß (4) getragenen Ring (43) aus kompressiblem Material eindringt.

5. Befestigung nach einem der Ansprüche 1 bis 4, **dadurch gekennzeichnet**, daß der gemeinsame Träger (21) eine von seiner unteren Fläche einmündende Ausschneidung (40) zur Positionierung des entsprechenden hinteren Fußes (4) an einer Stange (14) beim Einklinken dieses Fußes an den hinteren Stangen umfaßt.

6. Befestigung nach einem der Ansprüche 1 bis 5, **dadurch gekennzeichnet**, daß die hinteren Riegel (20) miteinander durch eine Traverse (28) verbunden sind, die ein manuelles Entriegelungsorgan bildet.

## Claims

1. Safety fixture for a removable vehicle seat of the type in which each of the four legs (3, 4) of the underframe is equipped with means for fixing to a corresponding transverse rod (14) fixed in a well (15) of the floor, these means comprising one hook-shaped part for each of the front legs (3) and two hook-shaped parts (24, 26) for each of the rear legs (4), which cooperate with the said transverse rod, a movable latch for locking each of the said legs to the corresponding rod, means for returning the lath and manual means for unlatching this latch, characterized in that the said two hook-shaped parts (24, 26) each cooperate with one of the two fixed parallel rods (14) arranged in a same well of the floor, these two parts (24, 26) being formed, respectively, on a front latch (19) and on a rear latch (20), while the front latch (19) is articulated at the front and at the base of a common support (21) and includes, opposite its hook-shaped part (24) and in its rear upper part, a triangular heel (25) delimited by two stop faces, an upper stop face (25a) for locking in the latched position and a rear stop face (25b) for locking in the open position, and the rear latch (20) is articulated close to the vertex and substantially in the middle of the common support (21) and includes, between this articulation and its hook-shaped part (26) and on its front face, a triangular protuberance (27) delimited by two stop faces, a front stop face (27a) for locking in the open position and a lower stop face (27b) for locking in the latched position, the triangular heel (25) of the front latch (19) and the triangular protuberance (27) of the rear latch (20) cooperating so as to bring about the self-locking of the fixture.

2. Fixture according to Claim 1, characterized in that the front latch (19) is associated with return means (29) tending to return it to the unlatched position, while the rear latch (20) is associated with return means (30) tending to return it to the latched position.

3. Fixture according to either one of Claims 1 and 2, characterized in that the support (21) common to both latches (19, 20) is linked to each corresponding rear leg (4) by an articulation (23, 42, 43) with limited angular mobility.

4. Fixture according to Claim 3, characterized in that the common support (21) is composed of two side plates (21a, 21b) arranged on either side of the latches (19, 20), and one of these side plates is extended by a tenon (42) which penetrates into a ring (43) made of compressible material and carried by the corresponding rear leg (4).

5. Fixture according to any one of Claims 1 to 4, characterized in that the common support (21) includes, opening onto its lower face, a cutout 40 for positioning the corresponding rear leg (4) on a rod (14) during the engagement of this leg with the rear rods.

6. Fixture according to any one of Claims 1 to 5, characterized in that the rear latches (20) are connected to one another by a crosspiece (28) forming a manual unlatching member.
